# EUROPEAN PATENT APPLICATION

(11) **EP 3 038 353 A1**
(43) Date of publication of application: **29.06.2016**
(21) Application number: 14801887.2
(22) Date of filing: 16.05.2014
(51) Int. Cl.: H04N 7/15

(54) **METHOD, APPARATUS AND VIDEO TERMINAL FOR ESTABLISHING VIDEO CONFERENCE INTERFACE**

(30) Priority: 23.08.2013 CN 201310373357
(71) Applicant: ZTE Corporation, Shenzhen, Guangdong 518057 (CN)
(72) Inventor: LIAO, Jinmin, Shenzhen Guangdong Province 518057 (CN)
(74) Representative: Novagraaf Technologies
(86) International application number: PCT/CN2014/077725
(87) International publication number: WO 2014/187282

(57) **Abstract**

Provided are a method and a device for establishing a video conference interface, and a video terminal. The method includes the following steps that: conference information of each user device participating in the video conference is acquired, wherein the conference information is used for distinguishing different user devices; one-to-one corresponding labels for picture contents of respective user devices are generated according to the acquired conference information, so as to display multiple labels and corresponding picture contents on an interface of each user device. By the application of the method, the device and the video terminal, the information of all the parties in the conference can be displayed more visually, the user experience is enhanced, and the problem that the selection of conference party information to be displayed in a video conference is uncomprehensive and not visual is solved.

## Description

### Technical Field

The present disclosure relates to the field of communications, and in particular to a method and a device for establishing a video conference interface, and a video terminal.

### Background

A video conference is a multimedia communication technology, which realizes real-time and visible interactions among people in different places through a certain transmission medium, and distributes various types of information, such as a static or dynamic image of a person, a voice, a text and/or a picture, to terminal equipment of respective users through various existing communication transmission media. In this way, the geographically dispersed users can exchange information together through various modes, such as a picture and/or a sound, and the comprehension ability of each party on the contents can be enhanced, as if the users are holding a conference in the same meeting place.

The function of the video conference television appearing in the market at present has been very rich, which not only includes transmission of an audio and a video, but also realizes transmission of an auxiliary video through a double-video-stream transmission technology (i.e. the H.239 protocol). Under a general condition, a main video transmits an image or video of a person, and the auxiliary video transmits contents to be shared. Some factories have realized a multi-auxiliary-video function, that is, multiple parties are allowed to simultaneously transmit the auxiliary videos in the same video conference. In addition, there are many types of terminals that can be called, for example, besides conference television equipment, network communication tools, such as a mobile phone, a Pad and/or the Skype, can also be called.

With the development of the video technology, the users have more and more demands, and a video conference system is not only required to provide the transmission of a video, but also should have additional functions of the video conference system, such as sharing through an electronic whiteboard, a double-video technology and/or a remote application program, thus better completing the cooperation among participants. The video conference system can not only be used for holding a conference, but also be used as a multimedia collaboration platform.

At present, in a multi-party video conference, the selecting and layout modes for pictures of conference parties are stiffer and single. For example, in the process of selecting a picture layout, the user has to keep switching the picture layout till a wanted picture layout appears; if the user misses the wanted picture layout, the user has to perform the switching all over again. In addition, when selecting a displayed conference party picture, the user do not have a visual and exact understanding based on the conference party picture; for example, if there is a need to hang up the phone of a certain party in the current video conference, the user needs to know the Internet Protocol (IP) address of this party so as to precisely hang up the phone, otherwise, the user will easily hang up the phone of another user by mistakes as there is no corresponding relation between the IP address and the video picture.

### Summary

The embodiments of the present disclosure provide a method and a device for establishing a video conference interface, and a video terminal, to solve the problem that the selection of conference party information to be displayed in a video conference is uncomprehensive and not visual in the relevant technology.

To solve the technical problem, an embodiment of the present disclosure provides a method for establishing a video conference interface, which includes the following steps that: conference information of each user device participating in the video conference is acquired, wherein the conference information is used for distinguishing different user devices; one-to-one corresponding labels for picture contents of respective user devices are generated according to the acquired conference information, so as to display multiple labels and corresponding picture contents on an interface of each user device.

In an example embodiment, before the step that the conference information of each user device participating in the video conference is acquired, the method further includes the following steps that: whether all user devices have sent a video connection confirm message is detected, wherein the video connection confirm message is used for connecting a user device into the video conference; under a condition that all the user devices have sent the video connection confirm message, the conference information of each user device participating in the video conference is acquired.

In an example embodiment, after the step that the conference information of each user device participating in the video conference is acquired, the method further includes the following steps that: the number of windows that display the picture contents is determined according to the number of the user devices currently participating in the video conference; a window layout legend with the determined number of windows is displayed to enable a user to select different window layouts.

In an example embodiment, after the step that the one-to-one corresponding labels for the picture contents of respective user devices are generated according to the acquired conference information, the method further includes the following steps that: each user device saves the labels to a local contact list; under a condition that a video conference is established again, the each user device extracts one or more labels from the local contact list.

An embodiment of the present disclosure further provides a method for establishing a video conference interface, which includes the following steps that: a first user device acquires conference information of other user devices participating in a video conference, wherein the conference information is used for distinguishing different user devices; the first user device generates one-to-one corresponding labels for picture contents of the other user devices according to the acquired conference information, so as to display multiple labels and corresponding picture contents on an interface of the first user device.

In an example embodiment, before the step that the first user device acquires the conference information of the other user devices participating in the video conference, the method further includes the following steps that: whether the other user devices have returned a video connection confirm message is detected, wherein the video connection confirm message is used for connecting a user device into the video conference; under a condition that the other user devices have returned the video connection confirm message, the conference information of the other user devices participating in the video conference is acquired.

In an example embodiment, after the step that first user device acquires the conference information of the other user devices participating in the video conference, the method further includes the following steps that: the number of windows that display the picture contents is determined according to the number of the user devices currently participating in the video conference; a window layout legend with the determined number of windows is displayed to enable a user to select different window layouts.

An embodiment of the present disclosure further provides a device for establishing a video conference interface, which includes: a first processing component configured to acquire conference information of each user device participating in the video conference, wherein the conference information is used for distinguishing different user devices; and further configured to generate one-to-one corresponding labels for picture contents of respective user devices according to the acquired conference information, so as to display multiple labels and corresponding picture contents on an interface of each user device.

In an example embodiment, the device further includes: a first detection component configured to detect whether all user devices have sent a video connection confirm message, wherein the video connection confirm message is used for connecting a user device into the video conference; the first processing component is further configured to, under a condition that all the user devices have sent the video connection confirm message, acquire the conference information of each user device participating in the video conference.

An embodiment of the present disclosure further provides a video terminal, which includes: a second processing component configured to acquire conference information of other user devices participating in a video conference, wherein the conference information is used for distinguishing different user devices; and further configured to generate one-to-one corresponding labels for picture contents of the other user devices according to the acquired conference information, so as to display multiple labels and corresponding picture contents on an interface of the first user device.

In an example embodiment, the device further includes: a second detection component configured to detect whether the other user devices have returned a video connection confirm message, wherein the video connection confirm message is used for connecting a user device into the video conference; the second processing component is further configured to, under a condition that the other user devices have returned the video connection confirm message, acquire the conference information of the other user devices participating in the video conference.

In an example embodiment, the device further includes: a scheduling component configured to save the labels to a local contact list; and further configured to, under a condition that a video conference is established again, extract one or more labels from the local contact list.

The embodiments of the present disclosure generate the one-to-one corresponding labels for the picture contents according to the acquired conference information of respective user devices, so that the information of each participant of the conference can be displayed more visually and the user experience can be improved.

### Brief Description of the Drawings

Fig. 1 is a flowchart of a method for establishing a video conference interface in an embodiment of the present disclosure;
Fig. 2 is a diagram of a window layout legend in an embodiment of the present disclosure;
Fig. 3 is a flowchart of another method for establishing a video conference interface in an embodiment of the present disclosure;
Fig. 4 is a first structural diagram of a device for establishing a video conference interface in an embodiment of the present disclosure;
Fig. 5 is a second structural diagram of a device for establishing a video conference interface in an embodiment of the present disclosure;
Fig. 6 is a third structural diagram of a device for establishing a video conference interface in an embodiment of the present disclosure;
Fig. 7 is a first structural diagram of a video terminal in an embodiment of the present disclosure;
Fig. 8 is a second structural diagram of a video terminal in an embodiment of the present disclosure;
Fig. 9 is a third structural diagram of a video terminal in an embodiment of the present disclosure;
Fig. 10 is a fourth structural diagram of a video terminal in an embodiment of the present disclosure;
Fig. 11 is a diagram showing that the generated labels are attached below the corresponding picture contents in an example embodiment II of the present disclosure;
Fig. 12 is a diagram showing that the generated labels are listed on the left side and the right side of the whole video interface in the form of digits in the example embodiment II of the present disclosure.

### Detailed Description of the Embodiments

To solve the problem in the relevant technology that the selection of conference party information to be displayed in a video conference is uncomprehensive and not visual, the embodiments of the present disclosure provide a method and a device for establishing a video conference interface, and a video terminal. The present disclosure is described below with reference to the accompanying drawings and embodiments in detail. It should be understood that the specific embodiments described here are only configured to explain the present disclosure, and not intended to limit the present disclosure.

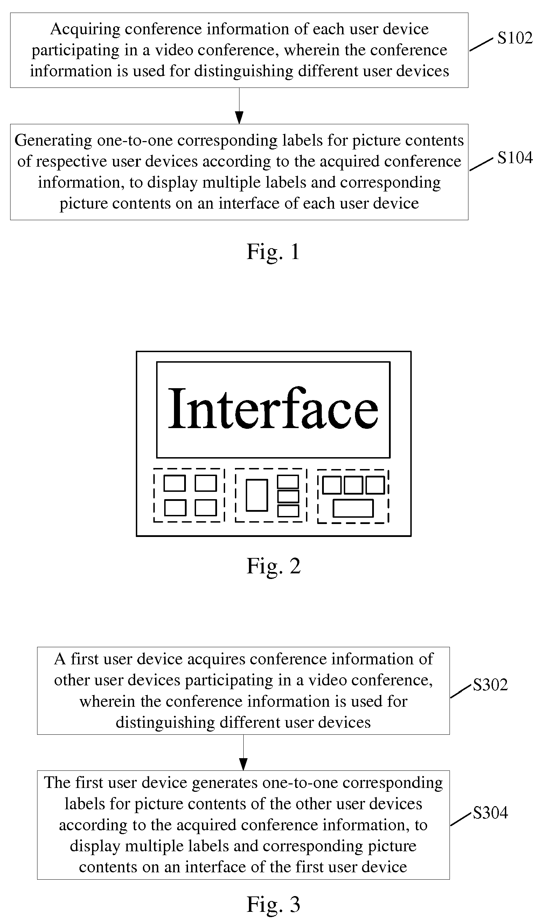

An embodiment provides a method for establishing a video conference interface, as shown in Fig. 1, the method includes the steps from S102 to S104.

S102: conference information of each user device participating in a video conference is acquired, wherein the conference information is used for distinguishing different user devices. In the specific implementing process, the conference information may be information, such as the IP address of the user device, the name of the user device, the name of a meeting place and picture contents. The person skilled in the art knows that the IP address and the picture contents are information in the video conference in the relevant technology, but they are only displayed on the interface. Compared with the relevant technology, the technical solution of this embodiment uniformly acquires the conference information, and distinguishes the conference information of different user devices.

As an example implementation mode, generally, as each user device corresponds to one IP address, in the video conference, different user devices can be distinguished according to different IP addresses. In another implementation mode, as different user devices also have different names, the participants in a certain meeting place can be distinguished according to the name of the meeting place. For example, if a certain user intends to hold a small video conference with one or more users in a meeting place in Chengdu alone, he can close the video windows in other meeting places except the meeting place in Chengdu.

S104: one-to-one corresponding labels for picture contents of respective user devices are generated according to the acquired conference information, so as to display multiple labels and corresponding picture contents on an interface of each user device. In the specific implementing process, the generated labels above may be either attached below the corresponding picture contents or listed on the left side and/or the right side of the whole video picture in the form of digits.

Due to the generation of the one-to-one corresponding labels for the picture contents according to the acquired conference information of respective user devices, the information of all the parties in the conference can be displayed more visually, and the user experience is enhanced.

Before the conference information of each user device participating in the video conference is acquired, whether all the user devices send a video connection confirm message may be further detected, wherein the video connection confirm message is used for connecting a user device into the video conference. As an example implementation mode, under a condition that all the user devices have sent the video connection confirm message, the conference information of each user device participating in the video conference is acquired. If some user devices have not sent the video connection confirm message, the conference information of each user device participating in the video conference may be acquired after other user devices have sent the message, so as to guarantee one-time completion of the acquisition on the conference information of all the user devices, and establish a complete corresponding relation.

After the conference information of each user device participating in the video conference is acquired, the number of windows which display the picture contents may be determined according to the number of the user devices currently participating in the video conference; a window layout legend with the determined number of windows is displayed to enable the user to select different window layouts. For example, as shown in Fig. 2, various window layouts are displayed when there are 4 user devices participating in the video conference at the present, and the user can select one layout form from the multiple layouts.

After the one-to-one corresponding labels for the picture contents of respective user devices are generated according to the acquired conference information, each user device may save the labels to a local contact list; when a video conference is established again, the each user device may extract one or more labels from the local contact list.

An embodiment further provides a method for establishing a video conference interface. The process of the method is as shown in Fig. 3, including the steps from S302 to S304.

S302: a first user device acquires conference information of other user devices participating in a video conference, wherein the conference information is used for distinguishing different user devices.

S304: the first user device generates one-to-one corresponding labels for picture contents of the other user devices according to the acquired conference information, so as to display multiple labels and corresponding picture contents on an interface of the first user device.

In the method for establishing the video conference, the acquisition on the conference information and the generation of the labels are respectively performed by each user device. The difference from the method for establishing the video conference above is that in the method above, the extraction of the conference information and the generation of the labels are performed by a third-party device, not by a local user device. By the mode of acquiring the conference information through the local user device, the labels can also be generated, thus achieving a more visual displaying effect.

Before acquiring the conference information of the other user devices participating in the video conference, the first user device may also judge whether the other user devices all accept to join the video conference according to locally received video connection confirm messages, wherein the video connection confirm message is used for connecting a user device into the video conference; under a condition that the other user devices all return the video connection confirm message, the first user device confirms that all the other user devices accept to join the video conference, and then acquires the conference information of the other user devices participating in the video conference.

The first user device side may determine the number of windows which display the picture contents according to the number of the user devices currently participating in the video conference, and display a window layout legend with the determined number of windows to enable the user to select different window layouts. The first user device may also save the labels to a local contact list; under a condition that a video conference is established again, the first user device side extracts one or more labels from the local contact list.

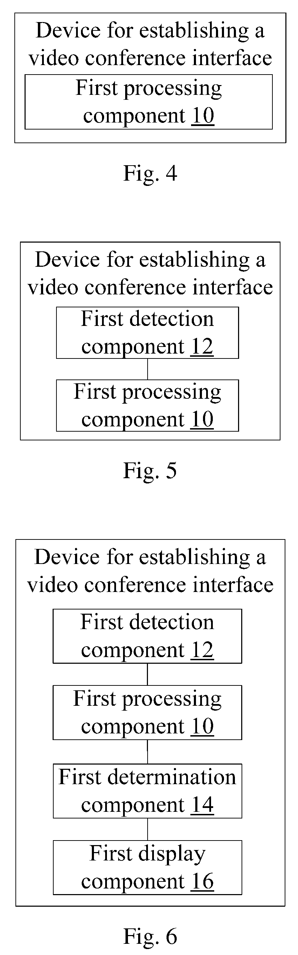

An embodiment further provides a device for establishing a video conference interface. The structure of the device is as shown in Fig. 4, and the device includes: a first processing component 10 configured to acquire conference information of each user device participating in the video conference, wherein the conference information is used for distinguishing different user devices; and further configured to generate one-to-one corresponding labels for picture contents of respective user devices according to the acquired conference information, so as to display multiple labels and corresponding picture contents on an interface of each user device.

Fig. 5 is an example structural diagram of the device. On the basis of Fig. 4, the device may further include: a first detection component 12 which is coupled with the first processing component 10 and configured to detect whether all user devices have sent a video connection confirm message, wherein the video connection confirm message is used for connecting a user device into the video conference; the first processing component 10 is further configured to, under a condition that all the user devices have sent the video connection confirm message, acquire the conference information of each user device participating in the video conference.

Fig. 6 is an example structural diagram of the device. On the basis of Fig. 5, the device may further include: a first determination component 14 which is coupled with the first processing component 10 and configured to determine the number of windows which display the picture contents according to the number of the user devices currently participating in the video conference; a first display component 16 which is coupled with the first determination component 14 and configured to display a window layout legend with the determined number of windows to enable the user to select different window layouts.

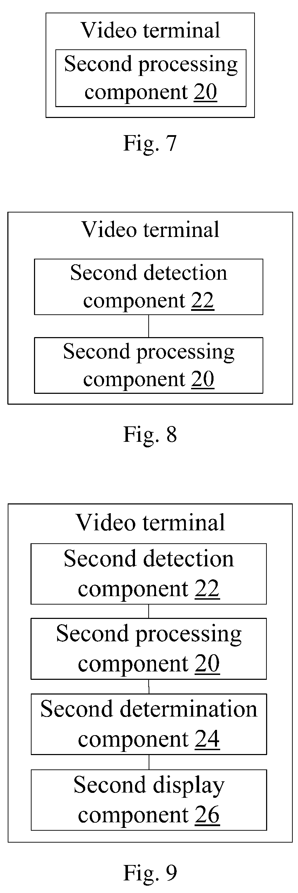

An embodiment further provides a video terminal, and the structure of the video terminal is as shown in Fig. 7. The video terminal includes: a second processing component 20 configured to acquire conference information of other user devices participating in a video conference, wherein the conference information is used for distinguishing different user devices; and further configured to generate one-to-one corresponding labels for picture contents of the other user devices according to the acquired conference information, so as to display multiple labels and corresponding picture contents on an interface of the first user device.

Fig. 8 is an example structural diagram of the device. On the basis of Fig. 7, the device may further include: a second detection component 22 which is coupled with the second processing component 20 and configured to detect whether the other user devices have returned a video connection confirm message, wherein the video connection confirm message is used for connecting a user device into the video conference; the second processing component 20 is further configured to, under a condition that the other user devices have returned the video connection confirm message, acquire the conference information of the other user devices participating in the video conference.

Fig. 9 is an example structural diagram of the device. On the basis of Fig. 8, the device may further include: a second determination component 24 which is coupled with the second processing component 20 and configured to determine the number of windows which display the picture contents according to the number of the user devices currently participating in the video conference; a second display component 26 which is coupled with the second determination component 24 and configured to display a window layout legend with the determined number of windows to enable the user to select different window layouts.

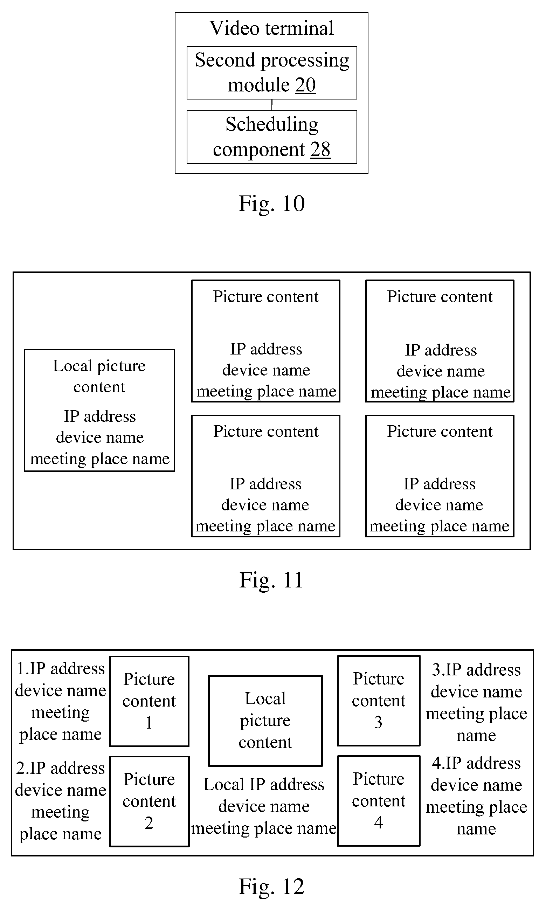

Fig. 10 is an example structural diagram of the device. On the basis of Fig. 7, the device may further include: a scheduling component 28 which is coupled with the second processing component 20 and configured to save the labels to a local contact list; and further configured to, under a condition that a video conference is established again, extract one or more labels from the local contact list.

### Example embodiment I

In view of the problem that the displayed conference party information is not visual enough during operation of selecting pictures to be displayed in a multi-party video conference using the current conference television, the embodiment provides a method for visually and conveniently acquiring and displaying the conference party information. By the application of the method, the visualization of a conference can be improved, and the user can select the displayed pictures conveniently.

The method provided by the embodiment can change the content and the mode for acquiring the conference information of a conference television terminal in the related art. When establishing a connection, each user device collects the conference information of participants, and the acquired conference information includes but is not limited to the contents such as the name of a conference party, a picture and information of a meeting place. In addition, the method can further display a selectable picture layout in front of the user in a visual label mode. For example, there are totally 5 users participating in the video conference at present, so 5 windows should respectively display a picture content of a local user and picture contents of the other 4 users; in this case, various picture layout templates can be shown on a video conference operation interface of the local user, thereby visually showing selectable window distribution styles to the users. The conference information used for generating the labels may be obtained from various sources, for example, if it is the first time to establish the video conference, the conference information is acquired from respective user devices during establishing of connections; if it is not the first time to establish the video conference, the user can see whether the local contact list saves the conference information of the other user devices used in the previous video conference; if the local contact list saves the conference information of the user devices, the user directly extracts the conference information from the local contact list; if the conference information of one or multiple user devices is not saved in the local contact list, the conference information can be saved for later use after this video conference is ended. Of course, each user can customize the conference information of the local user device, for example, a customized name, a selected picture, a selected small fragment of video and the like which are to be shown to other users.

The implementing process is described below.
Step 1: the conference information of all the other participants is collected. When the local user device and other user devices establish connections, the conference information of all the other participants is collected through the established connection (including but not limited to a name, a fixed picture, a small fragment of video and the like). In a specific implementing process, the collection process for the conference information may be realized by the mode below: each local user device collects the information of all the parties participating in the conference, or acquires the conference information of other participants in other ways, for example, the conference information is acquired through other platforms which have the information of the participants.
Step 2: a label of each conference party is generated according to the collected conference information.
Step 3: each local user device can visually learn about the information of the participants according to the generated labels.

The process above is described below with the combination of an example.

In the first video conference, a terminal A calls a terminal B, A and B establish a connection between them, and A acquires meeting place information of B; A generates a meeting place label of B according to the acquired meeting place information; A manages the generated label, and arrays the label in the form of a list; A selects the label to be operated so that a picture showing the selection of the meeting place label is displayed and the picture contents of the meeting place are displayed, and a video picture is displayed according to a selected mode (such as an equilateral triangle style, and a picture-in-picture style). In the meantime, B may also perform the same operation.

In the second video conference, when four parties, including the terminals A, B, C and D, hold a multi-point conference, a connection is established at first, and conference information of C and D is acquired; labels of the respective participants are generated according to the acquired conference information of C and D and the conference information of B which is saved in the local contact list, a certain label to be hung up is selected and the corresponding participant is hung up by clicking Hang Up, which is quick and visual.

At the end of the conference, the user may select to update the information of the local contact list, for example, the original picture is a default picture, and after the label information is acquired, the information of the contact list is updated according to the label of the latest conference information, including a picture, a text and the like. In the embodiment, after the conference, the labels of the conference information of C and D are added into the local contact list, and the label of B is updated. The terminals B, C and D may also perform the similar operation locally, which is not repeated here.

By the method, the information of the participants in the conference can be displayed more visually, to be more specific, what you see is what you get; the information of the participants is visually displayed in front of the user, so that the user can select a picture of a participant more conveniently.

### Example embodiment II

The example embodiment provides a device for establishing a video conference interface. The video conference established by the adoption of the device is described below.

When a connection is established for the video conference, the device of the embodiment collects the conference information of the user device of each participant, and generates a one-to-one corresponding label for each user device according to the conference information. At the beginning of the video conference, the device sends multiple generated labels to each user device, so that each user device can obtain the labels of other user devices and the local user device. The device may further establish various templates with windows the number of which corresponds to the number of the users according to the current counted number of the users in the video conference, and each user can select a template meeting his/her own demand from the various templates to join the video conference. Fig. 11 is a diagram showing that the generated labels are attached below the corresponding picture contents when there are 5 users participating in the video conference. Fig. 12 is a diagram showing that the generated labels are listed on the left side and the right side of the whole video interface in the form of digits when there are 5 users participating in the video conference. Of course, the labels may be all arranged on the left side or all arranged on the right side.

Although, to this end, the example embodiments of the present disclosure have been disclosed for the purpose of demonstration, the person skilled in the art should realize that it is possible to perform various modifications, additions and replacements, so the scope of the present disclosure should not be limited to the embodiments above.

## Claims

1. A method for establishing a video conference interface, comprising:
acquiring conference information of each user device participating in a video conference, wherein the conference information is used for distinguishing different user devices;
generating one-to-one corresponding labels for picture contents of respective user devices according to the acquired conference information, so as to display multiple labels and corresponding picture contents on an interface of each user device.

2. The method according to claim 1, wherein before acquiring the conference information of each user device participating in the video conference, the method further comprises:
detecting whether all user devices have sent a video connection confirm message, wherein the video connection confirm message is used for connecting a user device into the video conference;
under a condition that all the user devices have sent the video connection confirm message, acquiring the conference information of each user device participating in the video conference.

3. The method according to claim 1, wherein after acquiring the conference information of each user device participating in the video conference, the method further comprises:
determining the number of windows that display the picture contents according to the number of the user devices currently participating in the video conference;
displaying a window layout legend with the determined number of windows to enable a user to select different window layouts.

4. The method according to any one of claims 1 to 3, wherein after generating the one-to-one corresponding label for the picture content of each user device according to the acquired conference information, the method further comprises:
saving, by each user device, the labels to a local contact list;
under a condition that a video conference is established again, extracting, by each user device, one or more labels from the local contact list.

5. A method for establishing a video conference interface, comprising:
acquiring, by a first user device, conference information of other user devices participating in a video conference, wherein the conference information is used for distinguishing different user devices;
generating, by the first user device, one-to-one corresponding labels for picture contents of the other user devices according to the acquired conference information, so as to display multiple labels and corresponding picture contents on an interface of the first user device.

6. The method according to claim 5, wherein before acquiring, by the first user device, the conference information of said other user devices participating in the video conference, the method further comprises:
detecting whether the other user devices have returned a video connection confirm message, wherein the video connection confirm message is used for connecting a user device into the video conference;
under a condition that the other user devices have returned the video connection confirm message, acquiring the conference information of the other user devices participating in the video conference.

7. The method according to claim 5 or 6, wherein after acquiring, by the first user device, the conference information of the other user devices participating in the video conference, the method further comprises:
determining the number of windows that display the picture contents according to the number of the user devices currently participating in the video conference;
displaying a window layout legend with the determined number of windows to enable a user to select different window layouts.

8. A device for establishing a video conference interface, comprising:
a first processing component configured to acquire conference information of each user device participating in a video conference, wherein the conference information is used for distinguishing different user devices; and further configured to generate one-to-one corresponding labels for picture contents of respective user devices according to the acquired conference information, so as to display multiple labels and corresponding picture contents on an interface of each user device.

9. The device according to claim 8, further comprising:
a first detection component configured to detect whether all user devices have sent a video connection confirm message, wherein the video connection confirm message is used for connecting a user device into the video conference;
the first processing component is further configured to, under a condition that all the user devices have sent the video connection confirm message, acquire the conference information of each user device participating in the video conference.

10. A video terminal, comprising:
a second processing component configured to acquire conference information of other user devices participating in a video conference, wherein the conference information is used for distinguishing different user devices; and further configured to generate one-to-one corresponding labels for picture contents of the other user devices according to the acquired conference information, so as to display multiple labels and corresponding picture contents on an interface of the first user device.

11. The video terminal according to claim 10, further comprising:
a second detection component configured to detect whether the other user devices have returned a video connection confirm message, wherein the video connection confirm message is used for connecting a user device into the video conference;
the second processing component is further configured to, under a condition that the other user devices have returned the video connection confirm message, acquire the conference information of the other user devices participating in the video conference.

12. The video terminal according to claim 10 or 11, further comprising:
a scheduling component configured to save the labels to a local contact list; and further configured to, under a condition that a video conference is established again, extract one or more labels from the local contact list.
